# EUROPÄISCHE PATENTANMELDUNG

(11) **EP 2 014 995 A2**
(43) Veröffentlichungstag der Anmeldung: **14.01.2009**
(21) Anmeldenummer: 08401003.2
(22) Anmeldetag: 10.07.2008
(51) Int. Cl.: F24F 3/14, F24F 5/00

(54) **Klimagerät**

(30) Priorität: 10.07.2007 DE 202007009604 U
(71) Anmelder: Otto, Rainer, 21614 Buxtehude (DE)
(72) Erfinder: Otto, Rainer, 21614 Buxtehude (DE)
(74) Vertreter: Hansen, Jochen

(57) **Zusammenfassung**

Die Erfindung betrifft ein Klimagerät mit einem Lufteinlass (23), einem leitenden Luftkanal (22), einem Luftauslass (24), einem einen Luftstrom durch den Luftkanal (22) erzeugenden Rotor (32) und einem im Luftkanal (22) angeordneten Befeuchtungsfilter (12), wobei ein Entfeuchtungsfilter (11) stromaufwärts vom Befeuchtungsfilter (12) im Luftstrom angeordnet ist, wobei stromabwärts vom Befeuchtungsfilter (12) ein Mikrofilter (13) vorgesehen ist.

## Beschreibung

Die Erfindung betrifft ein Klimagerät mit einem Lufteinlass, einem leitenden Luftkanal, einem Luftauslass, einem einen Luftstrom durch den Luftkanal erzeugenden Rotor und einem im Luftkanal angeordneten Befeuchtungsfilter, wobei ein Entfeuchtungsfilter stromaufwärts vom Befeuchtungsfilter im Luftstrom angeordnet ist.

Derartige Klimageräte sind aus der DE 44 14 061 A1 bekannt. Darin ist ein Gerät für die Klimatisierung von Räumen beschrieben, das nach dem Sorptionsverfahren arbeitet. Ferner ist aus der DE 102 21 191 A1 ein Klimatisierungssystem für einen Innenraum, insbesondere einen Kraftfahrzeuginnenraum bekannt, das nach dem Prinzip der Befeuchtungskühlung arbeitet. Bei der Luftbefeuchtung besteht jedoch die Gefahr, dass Wasser unerwünscht aus dem Befeuchtungsfilter austritt.

Ferner sind Luftentfeuchter und auch Luftbefeuchtungsgeräte in unterschiedlicher Ausgestaltung bekannt. Die DE 202 10 935 U1 beschreibt eine Entfeuchter-Vorrichtung zur Entfeuchtung von Räumen bestehend aus einem Behälter und einem darin angeordneten Entfeuchtungsmaterial mit einer variabel einstellbaren entfeuchtungswirksamen Oberfläche für einen austauschbaren Flockenbeutel oder eine Schüttung aus einem Entfeuchter-Granulat. Die DE 93 09 692 U1 beschreibt ein Luftreinigungsgerät mit kombinierter Luftbefeuchtungsfunktion, bei der Befeuchtungselemente mit Wasser benetzt werden und der durchströmenden Luft mit dem natürlichen Prinzip der Verdunstung die notwendige Luftfeuchtigkeit zugeführt wird.

Weiter sind aufwendige Vorrichtungen zum Einstellen von Temperatur und Feuchtigkeit sowie Steuerverfahren hierzu aus der DE 43 91 901 C2 bekannt.

Weiter ist beispielsweise von den Herstellern Salton Europe Ltd. bzw. Pifco Ltd. ein Klimagerät mit der Bezeichnung Air Cooler bekannt. Dieses Klimagerät nutzt einen Befeuchtungsfilter zum Kühlen der Luft mittels des physikalischen Prinzips der Verdunstungskälte. Hierbei wird Luft mit Hilfe eines Ventilators durch einen Befeuchtungsfilter geblasen, wobei das innerhalb des Befeuchtungsfilters befindliche Wasser verdunstet, was zu einer Abkühlung der strömenden Luft führt. Die Energie, die zur Verdunstung des Wassers aus dem Befeuchtungsfilter nötig ist, wird der strömenden Luft in Form einer Temperaturdifferenz entzogen, was zu einer Temperaturabsenkung führt.

Nachteilig bei dieser Ausgestaltung eines Klimageräts ist die Abhängigkeit der Kühlleistung von der Luftfeuchtigkeit. Bei zu hoher Luftfeuchtigkeit verringert sich auf Grund der Physik der Verdunstung der Wirkungsgrad eines solchen Klimageräts. Dies geht so weit, dass das Gerät letztendlich gar nicht mehr funktioniert, da bei zu hoher Luftfeuchtigkeit keine Verdunstungskälte mehr entsteht, weil die Luft bereits gesättigt ist.

Der vorliegenden Erfindung liegt die Aufgabe zugrunde, eine Weiterentwicklung der bekannten Klimageräte nach dem Verdunstungsprinzip zu betreiben, wobei auch bei unterschiedlicher Luftfeuchte weder eine Leistungsreduktion noch die Gefahr von Feuchtigkeitsaustritt besteht.

Gelöst wird diese Aufgabe mit einem Klimagerät nach Anspruch 1.

Mit dem Entfeuchtungsfilter stromaufwärts vom Befeuchtungsfilter im Luftstrom wird die Luft vor der Befeuchtung entfeuchtet. Hierbei kann die nunmehr entfeuchtete Luft wesentlich mehr Feuchtigkeit aufnehmen, wodurch der Effekt der Luftabkühlung um ein Vielfaches verstärkt wird. Das Klimagerät ist somit für Klimabereiche mit erhöhter Luftfeuchtigkeit und zeitabhängigen Klimaschwankungen geeignet und in der Lage, die Luft zu kühlen, da der Wirkungsgrad, welcher stark von der vorherrschenden Luftfeuchtigkeit abhängig ist, sich erheblich verbessert. Wenn stromabwärts vom Befeuchtungsfilter ein Mikrofilter vorgesehen ist, kann so die ausströmende Luft vor dem Verlassen der Anordnung gereinigt und somit die Luftqualität verbessert werden. Dieser Mikrofilter hält auch etwaige Partikel aus der Anordnung selbst zurück. Ferner wird verhindert, dass Feuchtigkeit vom Befeuchtungsfilter in Form von Wassertropfen unerwünscht austritt.

Um eine Kontamination des Mikrofilters mit Wasser zu verhindern, ist der Mikrofilter teflonbeschichtet. Der teflonbeschichtete Filter verhindert die Aufnahme von Wassertröpfchen, die sich im Luftkanal bilden können, womit ein Wasseraustritt am stromabwärtigen Ende des Klimagerätes sicher vermieden wird.

Um die laufenden Kosten des Klimageräts klein zu halten, wird der Entfeuchtungsfilter als regenerativer Filter ausgebildet, so dass nach einer gewissen Zeit der Nichtverwendung der Entfeuchtungsfilter sich selbst regeneriert, wodurch dieser wieder seine volle Leistungsfähigkeit erhält.

Beispielsweise kann das Material des Entfeuchtungsfilters ein wasserabsorbierendes Silikatgel sein, womit der Filter durch ein handelsüblich zu erhaltendes Mittel regenerativ ausgestaltet ist. Diese kostengünstige Möglichkeit der Entfeuchtung innerhalb dieser Anordnung ist gleichwohl sehr effektiv. Alternativ lässt sich der Entfeuchtungsfilter als Einwegfilter ausbilden, wodurch ein erhöhter Anspruch an die Hygiene gewährleistet wird. Das Material des Entfeuchtungselements wird, nachdem es die Luft nicht mehr ausreichend entfeuchten kann, einfach aus der Anordnung enfernt und ersetzt.

Wenn ein Schaumstoffelement im Luftkanal zur Befeuchtung des Luftstroms angeordnet ist, wobei das Schaumstoffelement aus einer Vielzahl von einzelnen Schaumstoffsäulen besteht, kann so die Befeuchtung des Luftstroms auf einfachste Weise erfolgen. Der Schaumstoff nimmt dabei das Wasser gut auf und gibt es auf Grund seiner großen Oberfläche sehr gut an die vorbeiströmende Luft ab, was letztendlich zu einer größeren Abkühlung des Luftstroms führt.

Dadurch, dass die Schaumstoffsäulen zylindrische Elemente sind, die in einer Box parallel zueinander angeordnet sind, kann so ein sich Lösen der einzelnen Schaumstoffelemente vermieden werden.

Alternativ ist ein Befeuchtungselement aus Glasfasern im Luftkanal zur Befeuchtung des Luftstroms angeordnet, was ebenfalls zu einer wirksamen Art der Befeuchtung des Luftstroms führt. Diese Art der Befeuchtung ist dadurch innerhalb dieser Anordnung effizienter, da die Glasfasern eine noch größere Oberfläche aufweisen. Um die Festigkeit und die Haltbarkeit eines aus Glasfasern bestehenden Befeuchtungsfilters zu erhöhen, werden die Glasfasern in einzelnen Bündeln angeordnet. Dadurch wird eine hohe Standzeit des Filters erreicht.

Dadurch, dass Mittel zur Befeuchtung des Befeuchtungsfilters mit Wasser vorhanden sind, ist eine Befeuchtung des Luftstroms mittels des Befeuchtungsfilters über einen längeren Zeitabschnitt möglich. Dies verlängert die Betriebsdauer der Anordnung. Hierbei kann beispielsweise ein Vorratsgefäß mit einer Pumpe das Wasser auf den Befeuchtungfilter treufeln oder aber intervallartig den Befeuchtungsfilter mit Wasser tränken. Alternativ kann auch ein Anschluss an die Wasserversorgungsleitung vorgesehen sein.

Der Luftauslass kann röhrenförmig ausgebildet sein, womit ein gerichteter Luftstrom mit der Anordnung möglich ist. Wenn der Luftauslass trichterförmig ausgebildet ist, wobei der Hals des Trichters am Luftkanal angesetzt ist, so dass ein Luftzug im Raum vermieden werden kann, findet ein beruhigter Luftaustritt am Ende der Anordnung statt. Speziell bei Nachtbetrieb in einem Ruhebereich ist ein starker Luftzug häufig unerwünscht.

Wenn der Rotor im Luftauslass angeordnet ist, kann dieser durch ein größeren Durchmesser mehr Luft und diese im Wesentlichen laminar strömend durch den Luftkanal saugen.

Wenn der Trichter in seiner trichterförmigen Mantelfläche verschließbare Öffnungen, insbesondere in Form eines Schiebeverschlusses, aufweist, kann das Klimagerät auch als reiner Ventilator betrieben werden, dabei werden die verschließbaren Öffnungen durch Einstellung des Schiebeverschlusses geöffnet, so dass in der trichterförmigen Mantelfläche des Trichters Strömungsdurchlässe entstehen. Es strömt ein erheblicher Volumenanteil des durch den Rotor angetriebenen Luftstromes durch diese Öffnungen, die somit quasi einen Bypass zu den Filteranordnungen im Luftkanal des Klimagerätes bilden. Das Klimagerät arbeitet dann also als Ventilator.

Der Rotor wird durch einen mittels haushaltsüblicher Spannung, Akkumulatoren und/oder Solarzellen betriebenen Elektromotor angetrieben, wodurch das Klimagerät flexibel in der Art des Betriebs ist. Es kann an eine normale Stromversorgung im Haus angeschlossen werden, über Solarzellen mit Strom versorgt oder über einen Akkumulator betrieben werden. Gleichwohl wäre eine Kombination aus den einzelnen Möglichkeiten denkbar, die aufeinander aufbauen oder sich gegenseitig ersetzen.

Dadurch, dass das Gehäuse durch eine Abpolsterung oder durch Gitter verletzungssicher ausgestaltet ist, wird die Gefahr der Verletzung an oder durch das Gerät vermieden. Beispielsweise kann das Gerät durch Schaumstoff gepolstert sein oder aber durch Gitter im Bereich des Rotors beim Luftauslass als auch beim Lufteinlass vor ungewolltem Eingriff in das Geräteinnere geschützt werden.

Das Klimagerät ist als wand- und/oder deckenhängendes Gerät ausgebildet, wodurch es flexibel in seinem Montageort ist. Sowohl eine Überkopfmontage beispielsweise an der Decke ist möglich, als auch eine Montage an der Wand. Gleichwohl lässt sich das Gerät auch als alleinstehendes Klimagerät verwenden, was beispielsweise auf einem Tisch oder auf dem Boden aufstehend Platz finden kann.

Dadurch, dass eine Wandhalterung und ein schwenkbarer Arm vorgesehen sind, womit das Klimagerät abnehmbar und beabstandet an der Wand gehaltert ist, wird eine bevorzugte Befestigungsmöglichkeit des Klimageräts angegeben. Durch die Wandhalterung stört das Klimagerät nicht bei der üblichen Benutzung des Raumes. Der schwenkbare Arm an der Wandhalterung bewirkt eine erwünschte Schwenkbewegung des Klimagerätes, so dass der kühlende Luftstrom im ganzen Raum möglichst gleichmäßig verteilt wird.

Bevorzugt sind im schwenkbaren Arm Stellmotoren für eine Schwenkbewegung und für eine Höheneinstellung vorgesehen. Mit den Stellmotoren kann die Schwenkbewegung und auch einen Höheneinstellung für den Luftstromausgang des Klimagerätes durch einen teleskopierbaren Schwenkarm realisiert werden. Wenn die Stellmotoren im schwenkbaren Arm angeordnet sind, ergibt sich eine formschöne Gestaltung ohne gesonderte Gehäuse für die Antriebstechnik.

Dadurch, dass das Klimagerät eine wand- und/oder deckenbefestigte oder freistehende Basiseinheit und eine Kühleinheit aufweist, wobei die Kühleinheit in der Basiseinheit versenkbar angeordnet ist, ist eine Wartung erfreulicherweise sehr einfach möglich. Ebenso ist dies bei einer Montage sehr hilfreich. Wenn das Klimagerät Schneckengetriebe und damit verbundene Motoren zum Aus- bzw. Einfahren der Kühleinheit in/aus seiner Basiseinheit aufweist, ist ein automatisierter Ein- bzw. Ausfahrvorgang der Kühleinheit aus bzw. in die Basiseinheit realisiert.

Um beispielsweise einen vorhanden Stromanschluss einer Lampe in einem Raum zum Betrieb des Klimageräts zu benutzen, kann das Klimagerät eine oder mehrere Lampen und/oder eine oder mehrere Anschlussmöglichkeiten für eine oder mehrere Lampen aufweisen. Hierdurch braucht nicht auf eine Beleuchtung verzichtet oder eine neue Stromleitung zum Montageort aufwendig verlegt werden.

In dem Klimagerät ist eine Steuereinheit zum Ansteuern der einzelnen Funktionen vorgesehen. Durch eine Fernsteuerung ist die Bedienung von jedem Punkt im Raum oder aus der Ferne möglich.

Alternativ oder auch zusätzlich kann das Klimagerät eine Zeitschaltuhr zur Ansteuerung der einzelnen Funktionen aufweisen, wodurch das Gerät auf Wunsch zu einem bestimmten Zeitpunkt den Betrieb aufnimmt oder auch einstellt. Beispielsweise lassen sich so Start- und/oder Betriebszeiten voreinstellen, damit bei Nichtanwesenheit eines Bedieners das Klimagerät seine Funktion ausführen kann.

Nachfolgend wird ein Ausführungsbeispiel der Erfindung anhand der beiliegenden Zeichnungen beschrieben.

Darin zeigt:
- Fig. 1: eine Längsschnittdarstellung des erfindungsgemäßen Klimageräts,
- Fig. 2: eine Längsschnittdarstellung eines Ausführungsbeispiels des erfindungsgemäßen Klimageräts mit Kühl- und Basiseinheit,
- Fig. 3: ein erfindungsgemäßes Klimagerät in der Ausgestaltung als verfahrbares Standgerät und
- Fig. 4: im Detail eine Wandhalterung für das Klimagerät.

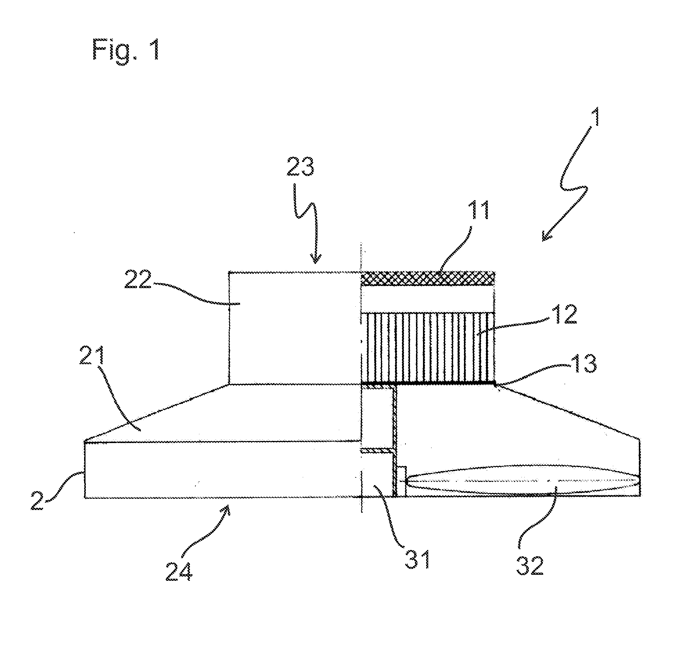

In Fig. 1 ist ein Klimagerät 1 in Längsschnittdarstellung dargestellt. Das Klimagerät 1 weist ein Gehäuse 2 auf, das einen Luftkanal 22 bildet. Dieser Luftkanal 22 wird auf der einen Seite durch den Lufteinlass 23 und auf der anderen Seite durch den Luftauslass 24 begrenzt. Der Luftauslass 24 ist im dargestellten Ausführungsbeispiel als Trichter 21 ausgebildet. Das offene breite Ende des Trichters 21 ist die freie Öffnung des Luftauslasses 24.

In dem Luftauslass 24 befindet sich ein Elektromotor 31, der einen Rotor 32 antreibt. Dieser Rotor 32 ist für die Erzeugung eines Luftstroms innerhalb der Anordnung verantwortlich. Die Luft betritt die Anordnung am Lufteinlass 23, strömt durch den Luftkanal 22 hindurch und verlässt die Anordnung beim Luftauslass 24.

Auf diesem Weg durch die Anordnung wird die strömende Luft durch einen Entfeuchtungsfilter 11, welcher am Lufteinlass angeordnet ist, entfeuchtet. Durch ein beispielsweise Silikatgel wird der Luft die Feuchtigkeit entzogen, wodurch die Luft trockener wird. Diese nun trockenere Luft wird im weiteren Verlauf innerhalb der Anordnung durch einen Befeuchtungsfilter 12 geleitet. Dieser Befeuchtungsfilter 12 ist mit Wasser getränkt.

Das Wasser innerhalb des Befeuchtungsfilters 12 verdunstet verstärkt im künstlichen Luftstrom. Zur Verdunstung des Wassers ist Energie nötig, die aus der strömenden Luft entzogen wird. Hierbei fällt die Lufttemperatur ab, da die Energie zum Verdunsten aus der inneren Energie der Luft entnommen wird. Dieser Energieentzug bzw. der Prozess wird als Verdunstungskälte bezeichnet.

Nachdem die strömende Luft eine verringerte Temperatur aufweist, strömt sie innerhalb der Anordnung weiter durch einen Mikrofilter 13, der teflonbeschichtet ausgestaltet sein kann. Durch diesen Mikrofilter 13 wird die Luft vor Austritt gereinigt. Ferner wird verhindert, dass Feuchtigkeit vom Befeuchtungsfilter in Form von Wassertropfen unerwünscht austritt.

Als letzte Station der strömenden Luft ist der Rotor 32 im Bereich des Luftauslasses 24 zu nennen. Der Rotor 32 ist wie oben beschrieben für die Strömung der Luft verantwotlich, der Rotor 32 saugt die Luft durch den Luftkanal 22 durch die gesamte Anordnung, nämlich das Klimagerät 1 hindurch.

Der Rotor 32 ist in dieser Ausgestaltung im Bereich des Luftauslasses 24 in Form des Trichters 21 angeordnet. Dieser Trichter 21 dient zum einen als Diffusor, um die Luft im Raum besser zu verteilen, und weiter noch als Volumenvergrösserung des Gehäuses 1, wodurch der Rotor 32 einen größeren Durchmesser aufweisen kann. Hierdurch kann bei gleichbleibendem strömenden Luftvolumen die Drehzahl des den Rotor 32 antreibenden Elektromotors 31 verringert werden.

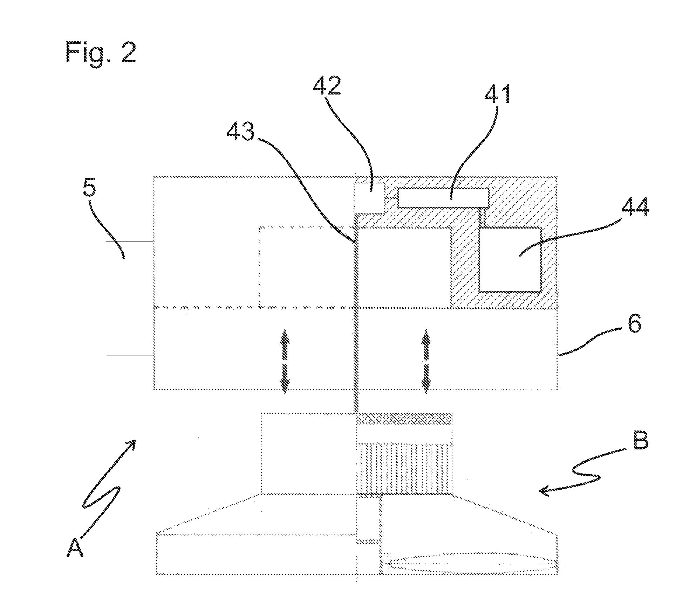

In Fig. 2 ist ein Ausführungsbeispiel des erfindungsgemäßen Klimageräts 1 mit Kühleinheit B und Basiseinheit A dargestellt. Die Basiseinheit A ist hierbei wand-und/oder deckenmontiert. Die Kühleinheit B ist aus der Basiseinheit A herausfahrbar ausgebildet, so dass die Kühleinheit B bei Nichtbenutzung in der Basiseinheit A verweilt.

Die Hebe- und Senkbewegung wird mittels eines Seilhebezugs 43 bewerkstelligt. Dieser Seilhebezug 43 wird über Schneckengetriebe 42 mittels eines Hebe-/Senkelektromotors 41 heraufgezogen bzw. herabgelassen.

Eine Steuereinheit 44 besteht aus Stromversorgung, Steuerung und Zeitschaltuhr. Die Steuereinheit 44 dient zur Ansteuerung der gesamten Anordnung, nämlich dem Klimagerät 1, bestehend aus Basiseinheit A und Kühleinheit B. Weiter kann das Klimagerät 1 mittels Fernsteuerung betrieben werden, über die sämtliche Funktionen gesteuert werden können. Ein Empfänger hierfür befindet sich in der Basiseinheit A als Bestandteil der Steuereinheit 44.

Weiter ist noch eine Raumbeleuchtung 5 vorgesehen, die am Basisgehäuse 6 angebracht oder integriert ist. Alternativ kann auch eine Anschlussmöglichkeit zum Anschluss und Betrieb von handelsüblichen Zimmerlampen integriert sein.

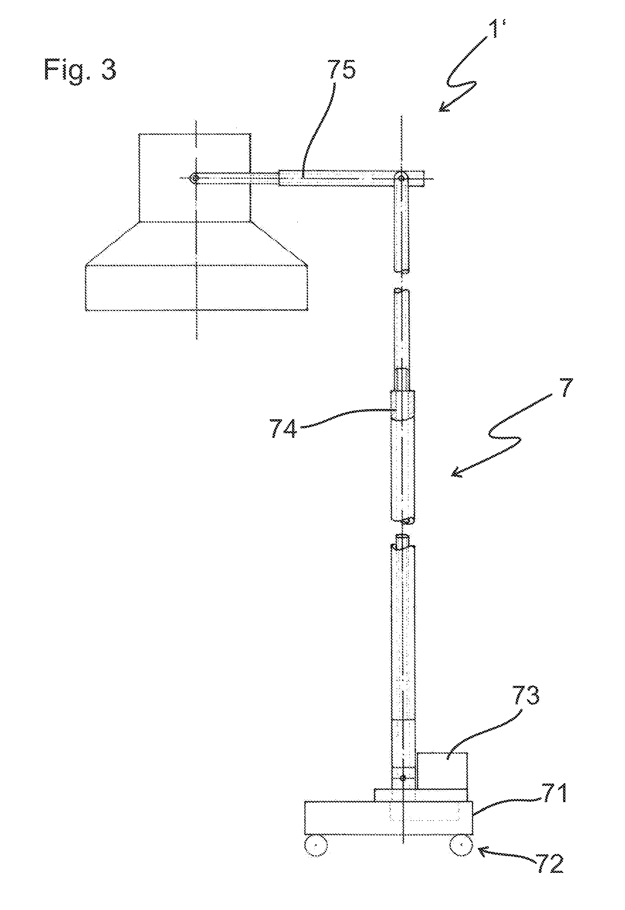

In Fig. 3 ist ein Klimagerät 1' in einer alternativen Ausführungsform als verfahrbares Standgerät dargestellt. Das Klimagerät 1' weist zur Halterung des Gehäuses 2 eine Standanordnung 7 auf, die eine Bodenplatte 71 mit Möbelrollen 72 und erforderlichenfalls Gegengewicht 73 hat. Ferner hat die Standanordnung 7 einen im Wesentlichen vertikal von der Bodenplatte 71 aufragenden Schwenkarm 74, der mittels zweier ineinandergeführter Rohre teleskopierbar ausgebildet ist. Ferner ist der Schwenkarm 74 um seine Längsachse schwenkbar ausgebildet, um den vom Klimagerät 1' erzeugten Luftstrom gleichmäßig im Raum verteilen zu können. Am oberen Ende des Schwenkarms 74 ist ein Ausleger 75 befestigt, an dessen auswärtigen Ende das Gehäuse 2 des Klimageräts 1 bevorzugt abnehmbar befestigt ist.

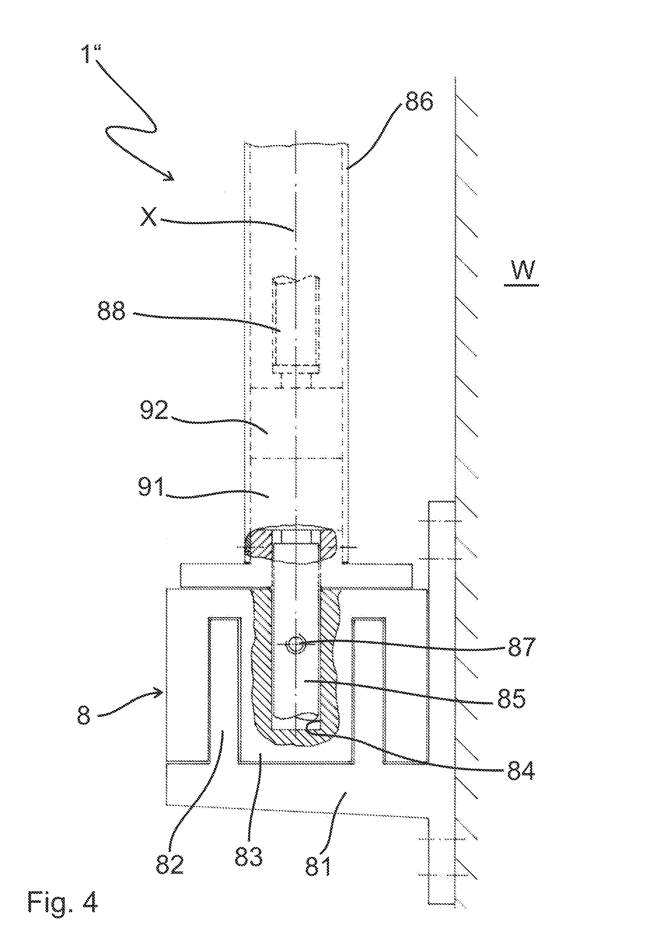

Eine weitere Ausgestaltung gemäß Fig. 4 betrifft ein Klimagerät 1" als Wandgerät, wobei in Fig. 4 lediglich eine Wandhalterung 8 im Detail dargestellt ist. Die Wandhalterung 8 weist eine Wandkonsole 81 zur Befestigung an einer Zimmerwand W auf. Die Wandkonsole 81 ist beispielsweise mittels Wanddübeln und zugeordneten Schraubmitteln an der Wand W befestigt. Die Wandkonsole 81 weist Passungszapfen 82 auf, auf die ein dazu negativ ausgebildetes Halteelement 83 aufsteckbar ist. In dem Halteelement 83 ist zentral eine Aufnahmebohrung 84 vorgesehen, in die eine von einem ersten Stellmotor 91 drehangetriebene Welle 85 eines Schwenkarms 86 mit einem Stift 87 fixiert eingreift. Ferner weist der Schwenkarm 86 einen zweiten Stellmotor 92 auf, der über eine Spindel die Höhenverstellung des teleskopierbaren Schwenkarms 86, ähnlich zur Ausgestaltung gemäß Fig. 3 und dort Schwenkarm 74, erlaubt.

Bei der Ausgestaltung gemäß Fig. 4 kann durch Ansteuerung des ersten Stellmotors 91 ein Hin- und Herschwenken des Klimageräts 1" um die in Fig. 4 strichpunktierte Vertikalachse X erreicht werden. Beispielsweise beträgt der Schwenkbereich 120 bis 180°. Mit dem zweiten Stellmotor 92 wird über die Spindel 88 der teleskopierbare Schwenkarm 86 ausgezogen bzw. eingezogen. Entsprechend kann die Höhenlage des Klimageräts 1" über die Ansteuerung des zweiten Stellmotors 92 ausgewählt werden.

### Bezugszeichenliste

- 1, 1', 1": Klimagerät
- 11: Entfeuchtungsfilter
- 12: Befeuchtungsfilter
- 13: Mikrofilter
- 2: Gehäuse
- 21: Trichter
- 22: Luftkanal
- 23: Lufteinlass
- 24: Luftauslass
- 31: Elektromotor
- 32: Rotor
- 41: Hebe- und Senkelektromotor
- 42: Schneckengetriebe
- 43: Seilhebezug
- 44: Steuereinheit
- 5: Raumbeleuchtung
- 6: Basisgehäuse
- 7: Standanordnung
- 71: Bodenplatte
- 72: Möbelrolle
- 73: Gegengewicht
- 74: Schwenkarm
- 75: Ausleger
- 8: Wandhalterung
- 81: Wandkonsole
- 82: Zapfen
- 83: Halteelement
- 84: Aufnahmebohrung
- 85: Welle
- 86: Schwenkarm
- 87: Stift
- 88: Spindel
- 91: erster Stellmotor
- 92: zweiter Stellmotor
- A: Basiseinheit
- B: Kühleinheit
- W: Wand
- X: Vertikalachse

## Patentansprüche

1. Klimagerät mit einem Lufteinlass (23), einem leitenden Luftkanal (22), einem Luftauslass (24), einem einen Luftstrom durch den Luftkanal (22) erzeugenden Rotor (32) und einem im Luftkanal (22) angeordneten Befeuchtungsfilter (12), wobei ein Entfeuchtungsfilter (11) stromaufwärts vom Befeuchtungsfilter (12) im Luftstrom angeordnet ist, **dadurch gekennzeichnet, dass** stromabwärts vom Befeuchtungsfilter (12) ein Mikrofilter (13) vorgesehen ist.

2. Klimagerät nach Anspruch 1, **dadurch gekennzeichnet, dass** der Mikrofilter (13) teflonbeschichtet ist.

3. Klimagerät nach Anspruch 1, **dadurch gekennzeichnet, dass** der Entfeuchtungsfilter (11) als regenerativer Filter ausgebildet ist.

4. Klimagerät nach einem der vorangehenden Ansprüche, **dadurch gekennzeichnet, dass** ein Schaumstoffelement als Befeuchtungsfilter (12) im Luftkanal (22) zur Befeuchtung des Luftstroms angeordnet ist, wobei das Schaumstoffelement aus einer Vielzahl von einzelnen Schaumstoffsäulen besteht.

5. Klimagerät nach Anspruch 4, **dadurch gekennzeichnet, dass** die Schaumstoffsäulen zylindrische Elemente sind, die in einer Box parallel zueinander angeordnet sind.

6. Klimagerät nach einem der Ansprüche 1 bis 3, **dadurch gekennzeichnet, dass** der Befeuchtungsfilter (12) aus in einzelnen Bündeln angeordneten Glasfasern gebildet ist, die im Luftkanal (22) zur Befeuchtung des Luftstroms angeordnet sind.

7. Klimagerät nach einem der vorangehenden Ansprüche, **dadurch gekennzeichnet, dass** Mittel zur Befeuchtung des Befeuchtungsfilters (12) mit Wasser vorhanden sind.

8. Klimagerät nach einem der vorangehenden Ansprüche, **dadurch gekennzeichnet, dass** der Luftauslass (24) trichterförmig ausgebildet ist, wobei der Hals des Trichters (21) am Luftkanal (22) angesetzt ist.

9. Klimagerät nach einem der vorangehenden Ansprüche, **dadurch gekennzeichnet, dass** der Rotor (32) im Luftauslass (24) angeordnet ist.

10. Klimagerät nach Anspruch 8 oder 9, **dadurch gekennzeichnet, dass** der Trichter (21) in seiner trichterförmigen Mantelfläche verschließbare Öffnungen, insbesondere in Form eines Schiebeverschlusses, aufweist.

11. Klimagerät nach einem der vorangehenden Ansprüche, **dadurch gekennzeichnet, dass** das Klimagerät als wand- und/oder deckenhängendes Gerät ausgebildet ist.

12. Klimagerät nach Anspruch 11, **dadurch gekennzeichnet, dass** eine Wandhalterung und ein schwenkbarer Arm vorgesehen sind, womit das Klimagerät abnehmbar und beabstandet an der Wand gehaltert ist.

13. Klimagerät nach Anspruch 12, **dadurch gekennzeichnet, dass** im schwenkbaren Arm Stellmotoren für eine Schwenkbewegung und für eine Höheneinstellung vorgesehen sind.

14. Klimagerät nach einem der vorangehenden Ansprüche, **dadurch gekennzeichnet, dass** das Klimagerät eine wand- und/oder deckenbefestigte oder freistehende Basiseinheit (A) und eine Kühleinheit (B) aufweist, wobei die Kühleinheit (B) in der Basiseinheit (A) versenkbar angeordnet ist und das Klimagerät Schneckengetriebe (42) und damit verbundene Hebe- und Senkelektromotoren (41) zum Aus- bzw. Einfahren der Kühleinheit (B) in/aus seiner Basiseinheit (A) aufweist.

15. Klimagerät nach einem der vorangehenden Ansprüche, **dadurch gekennzeichnet, dass** das Klimagerät eine oder mehrere Lampen (5) und/oder eine oder mehrere Anschlussmöglichkeiten für eine oder mehrere Lampen aufweist.
